# EUROPÄISCHE PATENTANMELDUNG

(11) **EP 4 467 217 A1**
(43) Veröffentlichungstag der Anmeldung: **27.11.2024**
(21) Anmeldenummer: 24175660.0
(22) Anmeldetag: 14.05.2024
(51) Int. Cl.: B01D 25/172, B01D 25/34

(54) **MASCHINENSYSTEM MIT FILTERPRESSE UND ENTNAHMEVORRICHTUNG**

(30) Priorität: 22.05.2023 DE 102023113327
(71) Anmelder: Strassburger Filter GmbH & Co. KG, 67593 Westhofen /Rheinhessen (DE)
(72) Erfinder: Duckgeischel, Dominik, 55234 Bechtolsheim (DE)
(74) Vertreter: WSL Patentanwälte Partnerschaft mbB

(57) **Zusammenfassung**

Maschinensystem mit einer Filterpresse und einer Entnahmevorrichtung, wobei die Filterpresse ein Gestell und eine Mehrzahl von Platten aufweist, wobei die Platten entlang einer Hauptachse H der Filterpresse hintereinander in dem Gestell angeordnet sind, wobei die Filterpresse einen Aufstellraum definiert, der zumindest das Gestell und die Platten vollständig aufnimmt und vertikale Seitenflächen aufweist und wobei die Entnahmevorrichtung zur Entnahme von Platten aus dem Gestell eingerichtet ist. Die Entnahmevorrichtung ist überwiegend seitlich außerhalb des Aufstellraums angeordnet.

## Beschreibung

Die vorliegende Erfindung betrifft ein Maschinensystem mit einer Filterpresse und einer Entnahmevorrichtung.

Filterpressen werden zum Filtrieren von Flüssigkeiten genutzt. Bei der Filtrierung werden Partikel aus der Flüssigkeit entfernt. Ziel ist stets ein besonders reines Filtrat, welches außer der erwünschten Flüssigkeit und ggf. erwünschten Partikeln keine anderen, unerwünschten Partikel aufweist. Zu den filtrierten Flüssigkeiten zählen Getränke wie Saft oder Wein sowie pharmazeutische Flüssigkeiten wie Blutplasma.

Eine aus der EP 3 400 997 A1 bekannte Filterpresse umfasst ein Gestell und eine Mehrzahl von Platten, wobei die Platten entlang einer Hauptachse H der Filterpresse hintereinander in dem Gestell angeordnet sind. Die Platten müssen von Zeit zu Zeit gereinigt werden. Hierzu werden die Platten einzeln aus der Filterpresse entnommen und in eine Waschvorrichtung verbracht. Zu diesem Zweck sind im Stand der Technik Entnahmevorrichtungen vorgesehen. Eine solche Entnahmevorrichtung umfasst einen schienengeführten Greifer, der direkt über der Filterpresse an der Decke des Raums montiert ist. Der Greifer entnimmt die Platten einzeln nach oben und transportiert sie in eine Waschvorrichtung. Nach dem Waschen transportiert der Greifer die Platte zurück an ihre Position in der Filterpresse.

Aus der EP 0 499 589 A1 ist eine Filtrieranlage bekannt, bei der Gasaustausch zwischen dem Ort, an dem die Reinigung der Platten vorgenommen wird und der Umgebung, insbesondere der bereits gereinigte Filterplatten enthaltenden Filterpresse, weitgehend unterbunden oder jedenfalls auf ein nach Maßgabe der Anwendung unschädliches Maß reduziert ist.

Insbesondere bei der Filtration von pharmazeutischen Flüssigkeiten werden besonders hohe Anforderungen an die Reinheit des Filtrats gestellt. Aufgabe der Erfindung war es daher, die Wahrscheinlichkeit einer Verunreinigung von Filterpressen zu verringern.

Diese Aufgabe wird durch ein Maschinensystem nach Anspruch 1 gelöst.

Das Maschinensystem umfasst eine Filterpresse und eine Entnahmevorrichtung. Die Filterpresse weist ein Gestell und eine Mehrzahl von Platten auf. Die Platten sind entlang einer Hauptachse H der Filterpresse hintereinander in dem Gestell angeordnet. Die Filterpresse definiert einen Aufstellraum, der zumindest das Gestell und die Platten vollständig aufnimmt und vertikale Seitenflächen aufweist. Die Entnahmevorrichtung ist zur Entnahme von Platten aus dem Gestell eingerichtet. Das Maschinensystem ist dadurch gekennzeichnet, dass die Entnahmevorrichtung überwiegend seitlich außerhalb des Aufstellraums angeordnet ist. Mit anderen Worten ist die Entnahmevorrichtung überwiegend außerhalb des Aufstellraums angeordnet und zwar seitlich, also insbesondere nicht oberhalb oder unterhalb des Aufstellraums bzw. oberhalb oder unterhalb der Filterpresse.

Die Hauptachse H verläuft bevorzugt horizontal.

Unter "seitlich" werden insbesondere Richtungen in horizontaler Richtung verstanden.

Es wurde erkannt, dass unerwünschte Partikel auf zwei Weisen in das Filtrat gelangen können. Zum Einen ist es denkbar, dass die Partikel bereits in der zu filtrierenden Flüssigkeit enthalten waren und von der Filterpresse nicht herausgefiltert wurden. Zum Anderen können Partikel aber auch in den Pausen zwischen Filtriervorgängen in die Filterpresse und während eines anschließenden Filtervorgangs in das Filtrat gelangen. Es hat sich gezeigt, dass aus dem Stand der Technik bekannte Entnahmevorrichtungen eine Quelle für unerwünschte Partikel darstellen. Grund hierfür ist unter anderem Abrieb in Lagern der Entnahmevorrichtung. Um zu vermeiden, dass Partikel von der Entnahmevorrichtung in das Filtrat gelangen, wird die Entnahmevorrichtung bei dem erfindungsgemäßen System seitlich außerhalb des unmittelbar über der Filterpresse liegenden Bereichs angeordnet. Partikel, die sich von der Entnahmevorrichtung lösen, fallen aufgrund der Gravitation im Wesentlichen nach unten. Durch die erfindungsgemäße Anordnung der Entnahmevorrichtung fallen diese Partikel neben und nicht auf die Filterpresse oder ihre wesentlichen Komponenten. Auf diese Weise wird verhindert, dass die Partikel in die Filterpresse, das Filtrat und/oder in die zu filtrierende Flüssigkeit gelangen. Die Reinheit des Filtrats wird dadurch verbessert.

Der Aufstellraum nimmt bevorzugt sämtliche Bestandteile der Filterpresse mit Ausnahme von Zuleitungen auf. Zu den Bestandteilen einer Filterpresse gehören insbesondere Traversen, Tragstangen, Füße und dergleichen. Der Aufstellraum ist bevorzugt nach oben unbegrenzt, also nach oben offen. Die Entnahmevorrichtung ist somit nicht oder nur zu einem geringen Teil über der Filterpresse angeordnet. Der Aufstellraum weist bevorzugt ausschließlich vertikale Seitenflächen auf. Der Aufstellraum weist bevorzugt die Form eines senkrechten Zylinders mit polygonaler Grundfläche (Prisma), insbesondere mit rechteckiger Grundfläche, auf. Wird das Maschinensystem in einem Raum, beispielsweise einer Halle oder einem Labor, angeordnet, so reicht der Aufstellraum in vertikaler Richtung bevorzugt vom Boden bis zur Decke des Raums.

Die Platten können Rahmenplatten, Membranplatten und/oder Filterplatten sein. Die Platten bilden gemeinsam ein Plattenpaket.

Die Entnahmevorrichtung kann mehrere unterschiedliche Stellungen einnehmen, insbesondere eine oder mehrere Handlingstellungen, eine oder mehrere Ruhestellungen und/oder eine oder mehrere Übergabestellungen. In einer Ruhestellung interagiert die Entnahmevorrichtung nicht mit der Filterpresse. Eine Ruhestellung ist insbesondere eine Stellung, in der die Entnahmevorrichtung mit keinem anderen Objekt interagiert. In einer Handlingstellung interagiert die Entnahmevorrichtung mit einer Platte der Filterpresse, insbesondere ist in der Handlingstellung eine temporäre Verbindung zwischen Entnahmevorrichtung und Platte vorhanden, beispielsweise da die Entnahmevorrichtung eine Platte hält. In einer Übergabestellung kann die Entnahmevorrichtung eine entnommene Platte an einen anderen Teil des Maschinensystems übergeben, beispielsweise an eine Reinigungsvorrichtung. Besonders vorteilhaft ist es, wenn die Entnahmevorrichtung zumindest in einer ihrer Stellungen vollständig seitlich außerhalb des Aufstellraums angeordnet ist, insbesondere in der Ruhestellung und/oder der Übergabestellung.

Bei vorteilhaften Weiterbildungen weist die Entnahmevorrichtung eine Halterung und eine an der Halterung montierte Greifeinrichtung auf, wobei die Greifeinrichtung zum Greifen einzelner oder mehrerer Platten eingerichtet ist. Das Greifen erfolgt mittels einer temporären Verbindung zwischen Greifeinrichtung und Platte(n). Zu den temporären Verbindungen zählen insbesondere mechanische Verbindungen (Kraftschluss und/oder Formschluss), pneumatische Verbindungen (Vakuumtechnik, Saugnapf) und magnetische Verbindungen.

Die Greifeinrichtung ist bevorzugt beweglich, insbesondere nimmt die Entnahmevorrichtung unterschiedliche Stellungen ein, indem sich die Greifeinrichtung von einer Stellung in eine andere Stellung bewegt. Die Greifeinrichtung ist bevorzugt eingerichtet, mindestens eine Stellung einzunehmen, in der sie der Filterpresse zugewandt ist, und mindestens eine Stellung einzunehmen, in der sie von der Filterpresse abgewandt ist. Die Greifeinrichtung kann ferner dazu eingerichtet sein, eine einer Reinigungsvorrichtung zugewandten Stellung einzunehmen.

Die Halterung ist bevorzugt vollständig außerhalb des Aufstellraums angeordnet. Diese Anordnung trägt dazu bei, dass von der Halterung und auch von Berührungspunkten zwischen der Halterung und der Greifeinrichtung wenig oder keine Partikel in die Filterpresse gelangen können. Die Halterung ist bevorzugt in sich unbeweglich, sie kann also insbesondere innerhalb der Entnahmevorrichtung keine unterschiedlichen Stellungen einnehmen.

Bei manchen vorteilhaften Weiterbildungen ist die Halterung geeignet, an einer Decke, einer Wand und/oder einem Boden montiert zu werden. Dadurch kann die Halterung neben der Filterpresse an einem festen, unveränderlichen Ort angeordnet werden. Sämtliche Bewegungen der Entnahmevorrichtung, also insbesondere Übergänge zwischen den Stellungen der Entnahmevorrichtung, werden dann vorzugsweise von der Greifeinrichtung ausgeführt. Durch die unveränderliche Anordnung der Halterung wird die Steuerung der Greifeinrichtung vereinfacht.

Bei anderen vorteilhaften Weiterbildungen ist die Halterung auf einem Flurförderfahrzeug, insbesondere einem fahrerlosen Transportfahrzeug, montiert. Unter einem Flurförderfahrzeug wird insbesondere ein Fahrzeug verstanden, das auf ebenem Boden fährt und einen eigenen Fahrantrieb aufweist. Schienengebundene Fahrzeuge und an einer Decke oder an einer Halterung hängende Fahrzeuge (z.B. Kräne) fallen insbesondere nicht unter den Begriff Flurförderfahrzeug. Die Anbringung der Halterung auf einem Flurförderfahrzeug bietet eine besonders große Flexibilität bei der Entnahme der Platten aus dem Gestell. Die Halterung und mit ihr die Greifeinrichtung kann dadurch an verschiedene Orte neben der Filterpresse gefahren werden. Das Flurförderfahrzeug kann dadurch einen Teil der Bewegungen der Entnahmevorrichtung übernehmen. Aufgrund dessen kann die Greifeinrichtung beispielsweise besonders kompakt ausgestaltet werden, da sie nicht mehr sämtliche Bewegungen ausüben muss. Unter einem fahrerlosen Transportfahrzeug wird insbesondere ein Flurförderfahrzeug verstanden, das eingerichtet ist, automatisch gesteuert und berührungslos geführt zu werden. Zudem kann das Flurförderfahrzeug so gesteuert werden, dass es zu keinem Zeitpunkt in den Aufstellraum hineinragt. Dadurch wird verhindert, dass Partikel von dem Flurförderfahrzeug in die Filterpresse gelangen.

Das fahrerlose Transportfahrzeug ist bevorzugt eingerichtet, eine oder mehrere Platten temporär aufzunehmen. Hierzu weist das fahrerlose Transportfahrzeug bevorzugt eine Ablagefläche und/oder eine Plattenhalterung auf. Auf diese Weise ist es möglich, dass mehrere Platten nacheinander oder gleichzeitig von der Entnahmevorrichtung aus dem Gestell entnommen werden und anschließend auf dem fahrerlosen Transportfahrzeug zwischengelagert werden. Anschließend kann das Flurförderfahrzeug mit den Platten zu der Reinigungsvorrichtung fahren, wo die Platten erneut einzeln oder zu mehreren von der Entnahmevorrichtung in dem Reinigungsbecken angeordnet werden. Auf diese Weise wird Fahrzeit des Flurförderfahrzeugs eingespart. Der Gesamtreinigungsprozess wird dadurch kürzer, wodurch die Filterpresse weniger Stillstandszeit hat. Die gewonnene Zeit kann alternativ in eine gründlichere Reinigung investiert werden. Auf diese Weise wird das Reinigungsergebnis verbessert.

Die Entnahmevorrichtung weist bevorzugt eine Entnahmesteuereinheit auf. Die Entnahmesteuereinheit ist bevorzugt eingerichtet, Signale betreffend die Bewegung des Flurförderfahrzeugs und/oder der Greifeinrichtung von einer zentralen Steuereinrichtung des Maschinensystems entgegenzunehmen und die Signale an das Flurförderfahrzeug und/oder die Greifeinrichtung weiterzugeben.

Bei vorteilhaften Weiterbildungen ist vorgesehen, dass die Halterung zumindest eine Schiene umfasst und dass die Greifeinrichtung einen auf der zumindest einen Schiene bewegbaren Schlitten umfasst. Die Greifeinrichtung kann sich mittels des Schlittens relativ zu der Schiene bewegen. Auf diese Weise kann die Greifeinrichtung die Bewegungen der Entnahmevorrichtung teilweise oder vollständig vollführen. Die Schiene oder zumindest ein Abschnitt der Schiene, der von dem Schlitten befahrbarist, ist bevorzugt vollständig außerhalb des Aufstellraums angeordnet. Dadurch wird verhindert, dass Partikel von der Schiene und insbesondere Abrieb zwischen Schiene und Schlitten in die Filterpresse gelangen können.

Die Schiene kann entweder an einem festen Ort montiert werden oder auf dem Flurförderfahrzeug. Wird die Schiene an einem festen Ort montiert, so vollführt die Greifeinrichtung sämtliche Bewegungen der Entnahmevorrichtung. Wird die Schiene auf dem Flurförderfahrzeug angeordnet, so werden die Bewegungen der Entnahmevorrichtung von der Greifeinrichtung und dem Flurförderfahrzeug ausgeübt.

Die Schiene verläuft bevorzugt parallel zu der Hauptachse der Filterpresse. Ferner erstreckt sich die Schiene über den gesamten Bereich, in dem die Platten in der Filterpresse angeordnet sind. Auf diese Weise kann die Greifeinrichtung in unmittelbare Nähe zu jeder der zu entnehmenden Platten verbracht werden.

Die Greifeinrichtung umfasst bevorzugt einen Gelenkarmroboter mit einer Greifeinheit. Unter einem Gelenkarmroboter wird insbesondere ein mehrachsiger Roboter verstanden. Bei einem Gelenkarmroboter entsteht im Betrieb wenig Abrieb, wodurch eine Verschmutzung der Filterpresse weitgehend vermieden wird. Außerdem ist ein Gelenkarmroboter gut geeignet, die entlang der Hauptachse H angeordneten Platten zu erreichen.

Der Gelenkarmroboter ist bevorzugt an dem Schlitten oder dem Flurförderfahrzeug, insbesondere mittels der Halterung, montiert. Auf diese Weise werden die Bewegungen der Entnahmevorrichtung von dem Schlitten und dem Gelenkarmroboter oder von dem Flurförderfahrzeug und dem Gelenkarmroboter vollzogen. Der Gelenkarmroboter kann dadurch kompakter gestaltet sein, da er nicht über die gesamte Länge der Filterpresse Platten erreichen muss. Der Gelenkarmroboter kann vielmehr mittels des Schlittens oder des Flurförderfahrzeugs in die Nähe der jeweils zu entnehmenden Platte gebracht werden und dort dann die eigentliche Entnahmeoperation durchführen.

Die Greifeinrichtung interagiert nur mit der Filterpresse, wenn Platten aus der Filterpresse entnommen und in die Filterpresse eingesetzt werden sollen. Während des Filtrationsvorgangs interagiert die Greifeinrichtung nicht mit der Filterpresse. Es wurde erkannt, dass in diesen Phasen der Eintrag von Partikeln in die Filterpresse weitgehend verhindert werden kann, indem die Greifeinrichtung vollständig von der Filterpresse entfernt wird. In einem von der Filterpresse abgewandten Zustand ist die Greifeinrichtung daher bevorzugt vollständig außerhalb des Aufstellraums angeordnet. Besonders bevorzugt ist die Entnahmevorrichtung vollständig außerhalb des Aufstellraums angeordnet, wenn sich die Greifeinrichtung in einer von der Filterpresse abgewandten Stellung befindet. Dadurch ist es beispielsweise während des Filtrationsvorgangs weitgehend ausgeschlossen, dass von der Entnahmevorrichtung Partikel in die Filterpresse gelangen.

Die Platten können aus verschiedenen Gründen aus der Filterpresse entnommen werden. Am häufigsten werden die Platten entnommen, um einer Reinigung unterzogen zu werden. Das Maschinensystem weist bevorzugt eine Reinigungsvorrichtung für Platten auf, die überwiegend außerhalb des Aufstellraums angeordnet ist, insbesondere in einer vertikalen Projektion.

Unter einer vertikalen Projektion wird eine Abbildung dreidimensionaler Objekte auf einer zweidimensionalen, horizontalen Ebene verstanden. Eine vertikale Projektion liegt demnach beispielsweise bei einer Draufsicht vor. Die Beurteilung, ob ein Objekt in vertikaler Projektion überwiegend außerhalb des Aufstellraums angeordnet ist, erfolgt anhand der Flächen in der zweidimensionalen, projizierten Ebene. Liegt mehr als die Hälfte (50 %) der Fläche des Objekts außerhalb der Fläche des Aufstellraums, so liegt das Objekt überwiegend außerhalb des Aufstellraums. Bevorzugt liegen sogar > 70 % der Fläche des Objekts und besonders bevorzugt > 90 % der Fläche des Objekts außerhalb des Aufstellraums. Je größer der Anteil ist, der außerhalb des Aufstellraums liegt, umso geringer ist die Wahrscheinlichkeit eines Eintrags von Partikeln von dem jeweiligen Objekt.

Zu den Objekten, bei denen im Rahmen der Erfindung eine Betrachtung ihrer Position relativ zu dem Aufstellraum in vertikaler Projektion in Betracht kommt, zählen insbesondere die Entnahmevorrichtung, die Greifeinrichtung, die Halterung, die Schiene und die Reinigungsvorrichtung. Besonders die Entnahmevorrichtung ist bevorzugt in einer vertikalen Projektion überwiegend seitlich außerhalb des Aufstellraums angeordnet.

Die Reinigungsvorrichtung umfasst bevorzugt ein Reinigungsbecken, das nach oben offen und optional von einer Abdeckung verschließbar ist. Bevorzugt sind in dem Reinigungsbecken Reinigungsdüsen angeordnet, die eine Reinigungsflüssigkeit unter Hochdruck ausstoßen können. Die Platten werden zur Reinigung in dem Reinigungsbecken angeordnet. Anschließend kann das Reinigungsbecken optional durch die Abdeckung verschlossen werden. Sodann wird Reinigungsflüssigkeit durch die Reinigungsdüsen geleitet. Die Reinigungsflüssigkeit wird dann unter Hochdruck ausgestoßen und trifft auf die Platten. Dadurch werden die Platten effizient gereinigt. Die Reinigungsflüssigkeit wird in dem Reinigungsbecken aufgefangen und von dort abgeleitet und optional aufbereitet.

Die Entnahmevorrichtung kann dafür eingerichtet sein, eine oder mehrere Platten von der Filterpresse unmittelbar zu der Reinigungsvorrichtung und zurück zu transportieren. Alternativ können die Platten auch von der Entnahmevorrichtung entnommen und an einem vorbestimmten Ort zwischengelagert werden. An dem Ort kann eine Plattenhalterung vorgesehen sein, in welcher die Platten zwischengelagert werden können. Von diesem Ort können die Platten dann durch eine weitere Vorrichtung, beispielsweise einen weiteren Gelenkarmroboter, an die Reinigungsvorrichtung übergeben werden. Der unmittelbare Transport von Filterpresse zu Reinigungsvorrichtung durch die Entnahmevorrichtung ist vorzuziehen, da in diesem Fall die Komplexität des Maschinensystems geringer ist.

Je weniger Bewegung die Entnahmevorrichtung bei der Entnahme der Platten und der Überführung der Platten an die Reinigungsvorrichtung vollführen muss, desto weniger Partikel geraten in die Filterpresse. Die Halterung der Entnahmevorrichtung oder die Entnahmevorrichtung insgesamt ist daher bevorzugt zwischen der Filterpresse und der Reinigungsvorrichtung angeordnet, insbesondere in einer vertikalen Projektion. Das gilt insbesondere für die Fälle, in denen die Entnahmevorrichtung an einem festen, unveränderlichen Ort angeordnet ist.

Das Maschinensystem kann eine oder mehrere Steuereinheiten aufweisen. Insbesondere können die Filterpresse, die Entnahmevorrichtung und die Reinigungsvorrichtung eine oder mehrere Steuereinheiten aufweisen. Zusätzlich kann das Maschinensystem eine zentrale Steuereinrichtung aufweisen, die mit den Steuereinheiten verbunden ist. Das Maschinensystem umfasst bevorzugt eine Steuerkonsole, die bevorzugt außerhalb des Aufstellraums liegt.

Das fahrerlose Transportfahrzeug kann auch zumindest teilweise autonom operieren. Bei vorteilhaften Weiterbildungen weisen die Filterpresse und/oder die Reinigungsvorrichtung einen Referenzpunkt oder mehrere Referenzpunkte für das fahrerlose Transportfahrzeug auf und das fahrerlose Transportfahrzeug umfasst eine Fahrzeugsteuereinheit, die eingerichtet ist, Referenzpunkte zu erfassen. Für die Erfassung kann das fahrerlose Transportfahrzeug beispielsweise ein optisches System, insbesondere eine Kamera, aufweisen.

Die Erfindung wird nachfolgend anhand der Zeichnungen beispielhaft dargestellt und erläutert. Es zeigt dabei:
- Figur 1: ein erfindungsgemäßes Maschinensystem in einer Perspektivansicht
- Figur 2a: das Maschinensystem der Figur 1 in einer Seitenansicht in einem ersten Zustand
- Figur 2b: das Maschinensystem der Figur 1 in einer Seitenansicht in einem zweiten Zustand
- Figur 3: das Maschinensystem der Figur 1 in einer Draufsicht
- Figur 4: das Maschinensystem der Figur 1 in einer Vorderansicht
- Figur 5: eine weitere Ausführungsform eines erfindungsgemäßen Maschinensystems in einer Perspektivansicht in einem ersten Zustand
- Figur 6: das Maschinensystem der Figur 5 in einer Draufsicht
- Figur 7: das Maschinensystem der Figur 5 in einer Perspektivansicht in einem zweiten Zustand

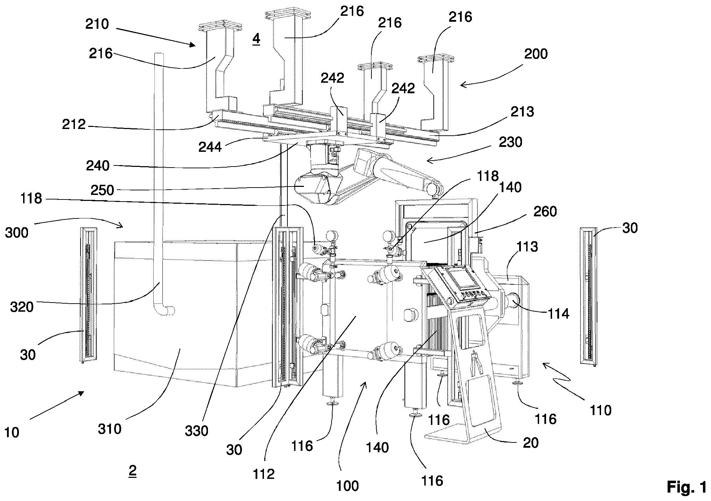

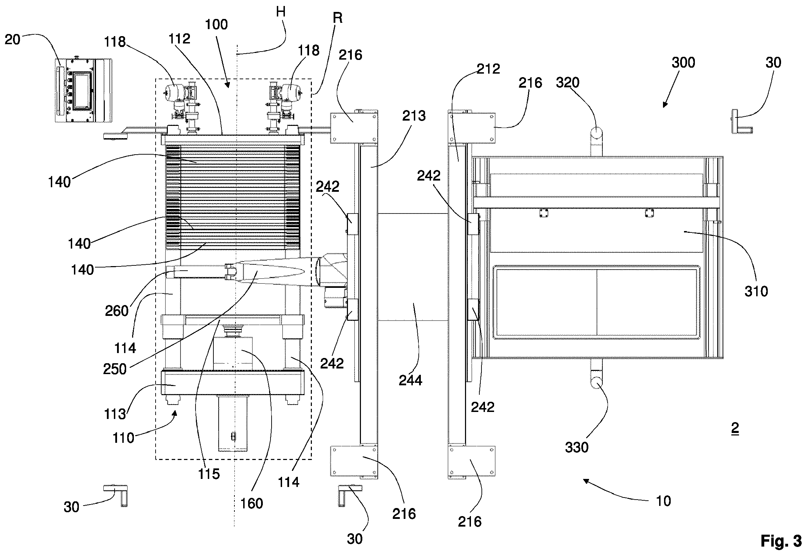

Das in den Figuren 1 bis 4 dargestellte Maschinensystem 10 umfasst eine Filterpresse 100, eine Entnahmevorrichtung 200 und eine Reinigungsvorrichtung 300. Die Figur 3 zeigt eine vertikale Projektion (Draufsicht) des Maschinensystems 10.

Das Maschinensystem 10 ist in einem Raum angeordnet, der einen Boden 2 und eine Decke 4 aufweist. Die Filterpresse 100 steht auf dem Boden 2.

Die Filterpresse 100 weist ein Gestell 110 sowie eine Mehrzahl von Platten 140 auf. Das Gestell 110 umfasst an zwei gegenüberliegenden Enden zwei Gestellplatten 112, 113 sowie eine zwischen den Gestellplatten 112, 113 angeordnete Pressplatte 115. Die Gestellplatten 112, 113 und die Pressplatte 115 sind über zwei Auflagebalken 114 miteinander verbunden sind. Die Gestellplatten 112,113 verlaufen senkrecht und sind mit jeweils zwei Füßen 116 verbunden, die auf dem Boden 2 stehen. Die Pressplatte 115 begrenzt gemeinsam mit der einen Gestellplatte 112 einen Aufnahmeraum für die Platten 140. Die Auflagebalken 114 verlaufen parallel zueinander.

Von der ersten Gestellplatte 112 zu der zweiten Gestellplatte 113 und parallel zu den Auflagebalken 114 verläuft eine Hauptachse H der Filterpresse. Die Hauptachse H und die Auflagebalken 114 verlaufen horizontal. Die Platten 140 liegen entlang der Hauptachse H hintereinander in dem Aufnahmeraum auf den Auflagebalken 114 auf und sind dadurch entlang der Hauptachse H hintereinander in dem Gestell 110 angeordnet.

Die erste Gestellplatte 112 umfasst mehrere Anschlüsse 118, durch welche die zu filtrierende Flüssigkeit zu den Platten 140 geleitet und die filtrierte Flüssigkeit (das Filtrat) von den Platten 140 abgeleitet wird.

Die Pressplatte 115 ist auf den Auflagebalken 114 entlang der Hauptachse H verschiebbar angeordnet. Die Filterpresse 100 umfasst eine Pressvorrichtung 160, mittels der die Pressplatte 115 in Richtung der ersten Gestellplatte 112 bewegt wird. Dadurch werden die Platten 140 bei bestimmungsgemäßem Gebrauch entlang der Hauptachse H zusammengepresst. In zusammengepresstem Zustand dichten die Platten 140 gegeneinander ab. Anschließend kann die zu filtrierende Flüssigkeit durch die Platten 140 geleitet werden, wodurch sie gefiltert wird. Vor der Entnahme der Platten 140 wird die Pressplatte 115 in Richtung der zweiten Gestellplatte 113 bewegt. Der Druck auf die Platten 140 nimmt dadurch ab, sodass sie leicht entnommen werden können.

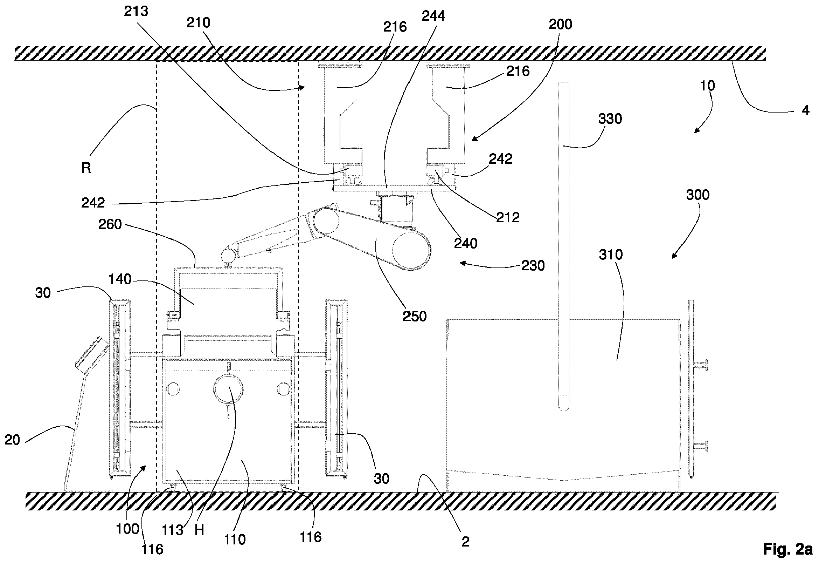

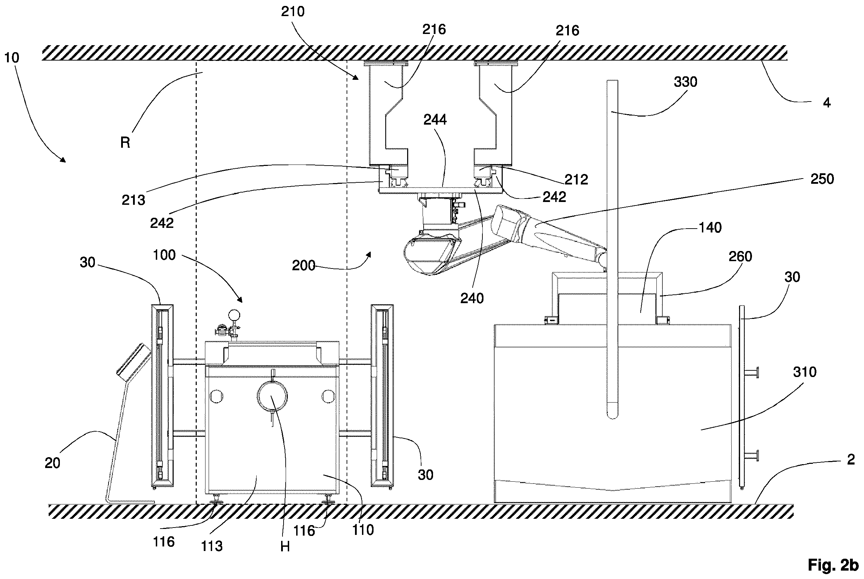

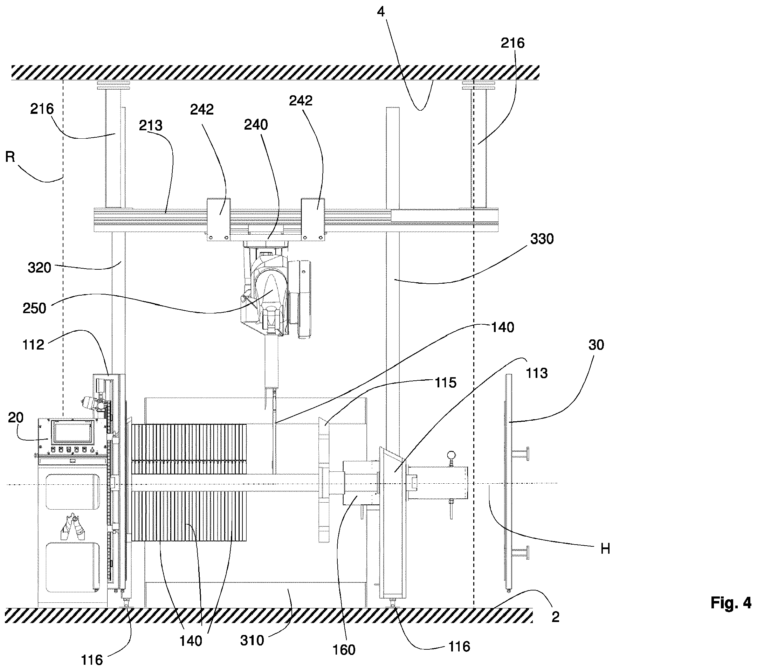

Die Filterpresse 100 definiert einen Aufstellraum R. Bei der gezeigten Ausführungsform nimmt der Aufstellraum R das Gestell 110 und die Platten 140 vollständig auf. Der Aufstellraum R weist eine rechteckige Grundform (siehe Figur 3) und vertikale Seitenflächen (siehe Figuren 2a, 2b, 4) auf, die in den Zeichnungen durch gestrichelte Linien angedeutet sind. In vertikaler Richtung verläuft der Aufstellraum R von dem Boden 2 bis zur Decke 4.

Die Entnahmevorrichtung 200 umfasst eine Halterung 210 mit zwei Schienen 212, 213. Die zwei Schienen 212 sind mittels jeweils zwei Haltern 216 an der Decke 4 montiert. Die Schienen 212, 213 verlaufen parallel zur Hauptachse H der Filterpresse 100. Außerdem verlaufen die Schienen 212, 213 vollständig außerhalb des Aufstellraums R (siehe Figur 3).

Die Entnahmevorrichtung 200 umfasst ferner eine Greifeinrichtung 230 mit einem Schlitten 240. Der Schlitten 240 wird von den Schienen 212, 213 linear geführt und ist entlang der Schienen 212, 213 verfahrbar. Der Schlitten 240 umfasst vier Laufeinheiten 242, von denen jeweils zwei von jeder der beiden Schienen 212, 213 geführt werden, und eine Montageplatte 244. Die Montageplatte 244 ist mit den vier Laufeinheiten 242 fest verbunden.

Die Greifeinrichtung 230 umfasst ferner einen Gelenkarmroboter 250, hier ein sechsachsiger Industrieroboter, und eine Greifeinheit 260. Der Gelenkarmroboter 250 ist an der Montageplatte 244 montiert und kann dadurch entlang der Schienen 212, 213 bewegt werden. Die Greifeinheit 260 ist eingerichtet, eine Platte 140 zu greifen, also eine temporäre Verbindung mit der Platte 140 herzustellen. Ist das geschehen, so kann die Greifeinheit 260 mittels des Gelenkarmroboters 250 nach oben aus dem Gestell 110 gehoben werden (siehe Figur 1). Dadurch ist die Entnahmevorrichtung 200 zur Entnahme von Platten 140 aus dem Gestell 110 eingerichtet.

Wie aus Figur 3 ersichtlich ist, ist die Entnahmevorrichtung 200 überwiegend seitlich außerhalb des Aufstellraums R angeordnet. Der Gelenkarmroboter 250 und die Greifeinheit 260 ragen in den Aufstellraum R hinein, wenn sich die Greifeinrichtung 230 in einer der Filterpresse 100 zugewandten Stellung befindet, also insbesondere wenn eine Platte 140 aus dem Gestell 110 entnommen wird (Figur 2a). Befindet sich die Greifeinrichtung 230 in einer von der Filterpresse 100 abgewandten Stellung, so befindet sich die Greifeinrichtung 230 vollständig außerhalb des Aufnahmeraums R (Figur 2b). Die Schienen 212, 213 und der Schlitten 240 sind in keiner Stellung innerhalb des Aufnahmeraums R angeordnet.

Die Reinigungsvorrichtung 300 umfasst ein Reinigungsbecken 310 mit einer Zuleitung 320 und einer Ableitung 330. Das Reinigungsbecken 310 ist würfelförmig. In der Darstellung der Figur 3 ist das Reinigungsbecken 310 nach oben offen. In diesem Zustand kann das Reinigungsbecken 310 mit Platten 140 bestückt werden. Anschließend wird das Reinigungsbecken 310 durch eine Abdeckung (nicht dargestellt) verschlossen und die Platten 140 werden einem Reinigungsprozess unterzogen. In dem Reinigungsbecken 310 befinden sich Reinigungsdüsen (nicht sichtbar), welche eine Reinigungsflüssigkeit unter Hochdruck ausstoßen und dadurch die Platten 140 reinigen. Die Reinigungsflüssigkeit wird mittels der Zuleitung 320 zu den Reinigungsdüsen geleitet. Mittels der Ableitung 330 wird die ausgestoßene Reinigungsflüssigkeit aus dem Reinigungsbecken 310 entfernt. Bei anderen Ausführungsformen können die Platten 140 auch in ein Bad aus Reinigungsflüssigkeit oder in einen kontinuierlichen Strom aus Reinigungsflüssigkeit eingetaucht werden. Die von der Entnahmevorrichtung 200 aus dem Gestell 110 entnommenen Platten 140 werden durch eine Bewegung des Gelenkarmroboters 250 und, falls nötig, des Schlittens 240 in dem Reinigungsbecken 310 angeordnet, wo sie mittels der Reinigungsflüssigkeit gereinigt werden. Anschließend können die Platten 140 wieder zurück in das Gestell 110 verbracht werden.

Die Reinigungsvorrichtung 300 ist vollständig außerhalb des Aufstellraums R angeordnet.

Das Maschinensystem 10 umfasst eine Steuerkonsole 20 zum Ansteuern der Filterpresse 100, der Entnahmevorrichtung 200 und der Reinigungsvorrichtung 300. Die Steuerkonsole 20 ist außerhalb des Aufstellraums R angeordnet. Das Maschinensystem 10 umfasst mehrere Steuereinheiten, die mit der Steuerkonsole 20 verbunden sind.

Das Maschinensystem 10 umfasst Lichtschranken 30, durch die eine Anwesenheit von Personen im Bereich um die Filterpresse 100 erfasst werden kann. Die Anwesenheit von Personen kann zu manchen Zeiten unerwünscht sein, insbesondere während des Filtrierprozesses.

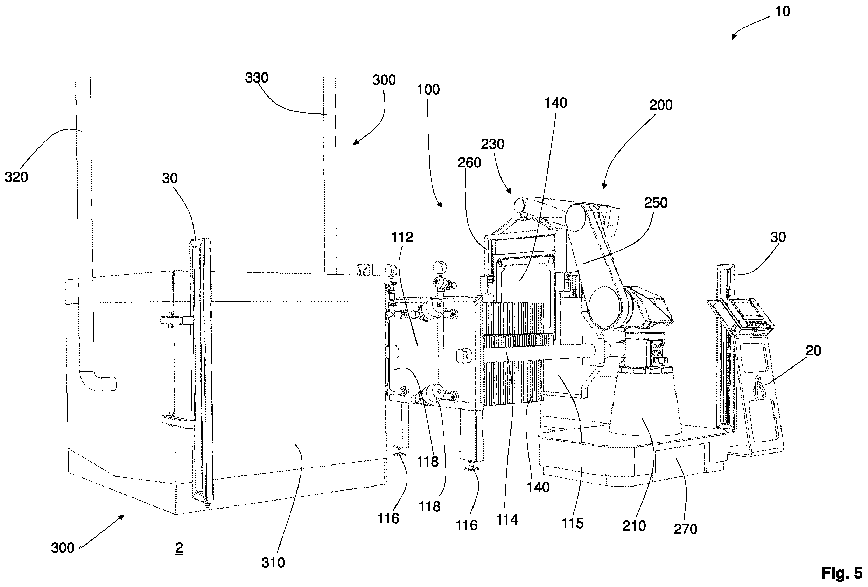

Das in den Figuren 5 bis 7 dargestellte Maschinensystem 10 umfasst ebenfalls eine Filterpresse 100, eine Entnahmevorrichtung 200 und eine Reinigungsvorrichtung 300. Die Filterpresse 100 und die Reinigungsvorrichtung 300 sind im Wesentlichen identisch zu den gleichen Baugruppen der ersten Ausführungsform (Figur 1).

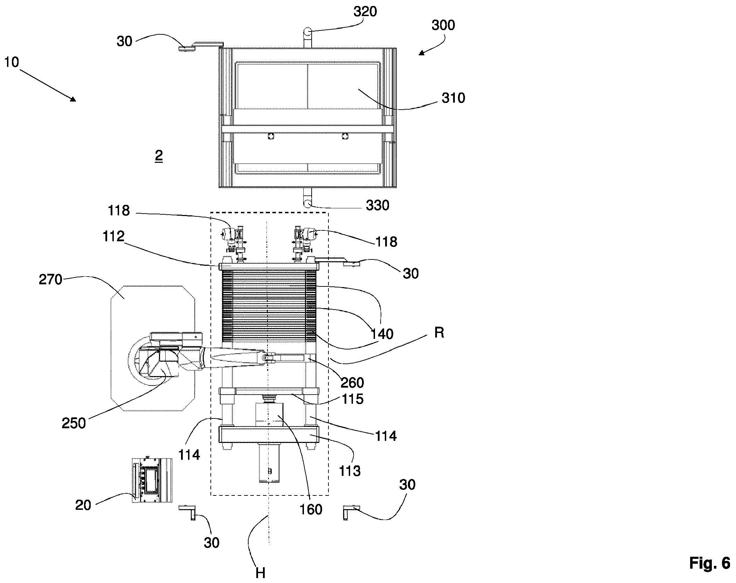

Die Entnahmevorrichtung 200 umfasst bei dieser Ausführungsform eine Halterung 210, die auf einem Flurförderfahrzeug 270 in Form eines fahrerlosen Transportfahrzeugs montiert ist. An der Halterung 210 ist eine Greifeinrichtung 230 montiert. Die Greifeinrichtung 230 umfasst einen Gelenkarmroboter 250, hier ein sechsachsiger Industrieroboter, und eine Greifeinheit 260. Die Greifeinheit 260 ist eingerichtet, eine Platte 140 zu greifen, also eine temporäre Verbindung mit der Platte 140 herzustellen. Ist das geschehen, so kann die Greifeinheit 260 mittels des Gelenkarmroboters 250 nach oben aus dem Gestell 110 gehoben werden (siehe Figur 6). Dadurch ist die Entnahmevorrichtung 200 zur Entnahme von Platten 140 aus dem Gestell 110 eingerichtet.

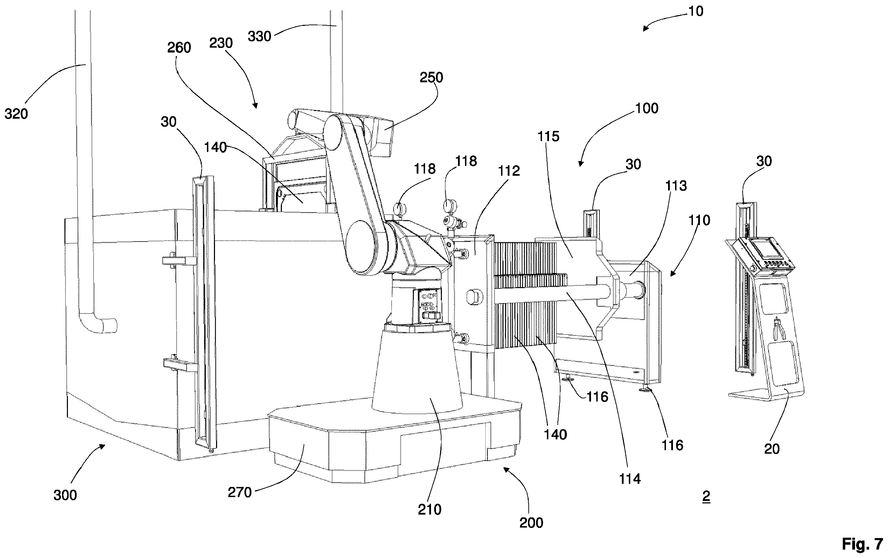

Nach der Entnahme einer Platte 140 kann die Greifeinrichtung 230 mittels des Flurförderfahrzeugs 270 neben das Reinigungsbecken 310 der Reinigungsvorrichtung 300 bewegt werden (siehe Figur 7). Dort kann die entnommene Platte 140 von der Greifeinrichtung 230 in dem Reinigungsbecken 310 angeordnet werden, wo sie gereinigt wird.

Es ist ferner möglich, dass mehrere Platten 140 nacheinander oder gleichzeitig von der Entnahmevorrichtung 200 aus dem Gestell 110 entnommen werden und anschließend auf dem Flurförderfahrzeug 270 zwischengelagert werden. Anschließend kann das Flurförderfahrzeug 270 mit den Platten 140 zu der Reinigungsvorrichtung 300 fahren, wo die Platten 140 erneut einzeln oder zu mehreren von der Entnahmevorrichtung 200 in dem Reinigungsbecken 310 angeordnet werden. Auf diese Weise wird Fahrzeit des Flurförderfahrzeugs 270 eingespart.

Anschließend wird die Platte 140 wieder mittels der Greifeinrichtung 230 aus dem Reinigungsbecken 310 entnommen. Das Flurförderfahrzeug 270 bewegt sich dann neben die Filterpresse 100, woraufhin die gereinigte Platte 140 wieder von der Greifeinrichtung 230 in das Gestell 110 eingesetzt werden kann. Die Greifeinrichtung 230 kann dann die nächste(n) Platte(n) 140 greifen, aus dem Gestell 110 entnehmen und der Reinigungsvorrichtung 300 zuführen.

### Bezugszeichenliste

- 2: Boden
- 4: Decke

- 10: Maschinensystem
- 20: Steuerkonsole
- 30: Lichtschranke

- 100: Filterpresse
- 110: Gestell
- 112: erste Gestellplatte
- 113: zweite Gestellplatte
- 114: Auflagebalken
- 115: Pressplatte
- 116: Fuß
- 118: Anschluss
- 140: Platte
- 160: Pressvorrichtung

- 200: Entnahmevorrichtung
- 210: Halterung
- 212: Schiene
- 213: Schiene
- 216: Halter
- 230: Greifeinrichtung
- 240: Schlitten
- 242: Laufeinheit
- 244: Montageplatte
- 250: Gelenkarmroboter
- 260: Greifeinheit
- 270: Flurförderfahrzeug

- 300: Reinigungsvorrichtung
- 310: Reinigungsbecken
- 320: Zuleitung
- 330: Ableitung
- H: Hauptachse
- R: Aufstellraum

## Patentansprüche

1. Maschinensystem (10) mit einer Filterpresse (100) und einer Entnahmevorrichtung (200),
wobei die Filterpresse (100) ein Gestell (110) und eine Mehrzahl von Platten (140) aufweist,
wobei die Platten (140) entlang einer Hauptachse (H) der Filterpresse (100) hintereinander in dem Gestell (110) angeordnet sind,
wobei die Filterpresse (100) einen Aufstellraum definiert, der zumindest das Gestell (110) und die Platten (140) vollständig aufnimmt und vertikale Seitenflächen aufweist und
wobei die Entnahmevorrichtung (200) zur Entnahme von Platten (140) aus dem Gestell (110) eingerichtet ist
**dadurch gekennzeichnet,**
**dass** die Entnahmevorrichtung (200) überwiegend seitlich außerhalb des Aufstellraums (R) angeordnet ist.

2. Maschinensystem (10) nach Anspruch 1, **dadurch gekennzeichnet, dass** die Entnahmevorrichtung (200) mehrere unterschiedliche Stellungen einnehmen kann und zumindest in einer Stellung vollständig seitlich außerhalb des Aufstellraums (R) angeordnet ist.

3. Maschinensystem (10) nach Anspruch 1 oder 2, **dadurch gekennzeichnet, dass** die Entnahmevorrichtung (200) eine Halterung (210) und eine an der Halterung (210) montierte Greifeinrichtung (230) aufweist, wobei die Greifeinrichtung (230) zum Greifen einzelner oder mehrerer Platten (140) eingerichtet ist.

4. Maschinensystem (10) nach Anspruch 3, **dadurch gekennzeichnet, dass** die Halterung (210) vollständig außerhalb des Aufstellraums (R) angeordnet ist.

5. Maschinensystem (10) nach Anspruch 3 oder 4, **dadurch gekennzeichnet, dass** die Halterung (210) geeignet ist, an einer Decke (4), einer Wand und/oder einem Boden (2) montiert zu werden.

6. Maschinensystem (10) nach Anspruch 3 oder 4, **dadurch gekennzeichnet, dass** die Halterung (210) auf einem Flurförderfahrzeug (270), insbesondere einem fahrerlosen Transportfahrzeug, montiert ist.

7. Maschinensystem (10) nach einem der Ansprüche 3 bis 6, **dadurch gekennzeichnet, dass** die Halterung (210) zumindest eine Schiene (212) umfasst und dass die Greifeinrichtung (230) einen auf der zumindest einen Schiene (212) bewegbaren Schlitten (240) umfasst.

8. Maschinensystem (10) nach Anspruch 7, **dadurch gekennzeichnet, dass** die Schiene (212) oder zumindest ein Abschnitt der Schiene (212), der von dem Schlitten (240) befahrbar ist, vollständig außerhalb des Aufstellraums (R) angeordnet ist.

9. Maschinensystem (10) nach einem der Ansprüche 3 bis 8, **dadurch gekennzeichnet, dass** die Greifeinrichtung (230) einen Gelenkarmroboter (250) mit einer Greifeinheit (260) umfasst, wobei der Gelenkarmroboter (250) an dem Schlitten (240) oder dem Flurförderfahrzeug (270) montiert ist.

10. Maschinensystem (10) nach einem der Ansprüche 3 bis 9, **dadurch gekennzeichnet, dass** die Greifeinrichtung (230) in einer von der Filterpresse (100) abgewandten Stellung vollständig außerhalb des Aufstellraums (R) angeordnet ist.

11. Maschinensystem (10) nach einem der Ansprüche 3 bis 10, **dadurch gekennzeichnet, dass** die Entnahmevorrichtung (200) vollständig außerhalb des Aufstellraums (R) angeordnet ist, wenn sich die Greifeinrichtung (230) in einer von der Filterpresse (100) abgewandten Stellung befindet.

12. Maschinensystem (10) nach einem der vorhergehenden Ansprüche, **dadurch gekennzeichnet, dass** das Maschinensystem (10) eine Reinigungsvorrichtung (300) für Platten (140) aufweist, die überwiegend außerhalb des Aufstellraums (R) angeordnet ist.

13. Maschinensystem (10) nach Anspruch 12, **dadurch gekennzeichnet, dass** die Entnahmevorrichtung (200) eingerichtet ist, Platten (140) von der Filterpresse (100) zu der Reinigungsvorrichtung (300) und zurück zu transportieren.

14. Maschinensystem (10) nach Anspruch 12 oder 13, **dadurch gekennzeichnet, dass** die Halterung (210) der Entnahmevorrichtung (200) oder die Entnahmevorrichtung (200) zwischen der Filterpresse (100) und der Reinigungsvorrichtung (300) angeordnet ist.

15. Maschinensystem (10) nach einem der Ansprüche 6 bis 14, **dadurch gekennzeichnet, dass** die Filterpresse (100) und/oder die Reinigungsvorrichtung (300) einen oder mehrere Referenzpunkte für das fahrerlose Transportfahrzeug aufweist und dass das fahrerlose Transportfahrzeug eine Fahrzeugsteuereinheit umfasst, die eingerichtet ist, Referenzpunkte zu erfassen.
